# EUROPÄISCHE PATENTSCHRIFT

(11) **EP 3 802 165 B1**
(45) Veröffentlichungstag und Bekanntmachung des Hinweises auf die Patenterteilung: **11.10.2023**
(21) Anmeldenummer: 19748755.6
(22) Anmeldetag: 16.07.2019
(51) Int. Cl.: B60D 1/62, B61C 5/00, F16L 11/00

(54) **FAHRZEUG UND BETRIEBSVERFAHREN FÜR EIN FAHRZEUG**
VEHICLE AND OPERATING METHOD FOR A VEHICLE
VÉHICULE ET PROCÉDÉ DE FONCTIONNEMENT D'UN VÉHICULE

(30) Priorität: 18.07.2018 DE 102018211991; 07.03.2019 DE 102019203105
(43) Veröffentlichungstag der Anmeldung: 14.04.2021
(73) Patentinhaber: Siemens Mobility GmbH, 81739 München (DE)
(72) Erfinder: PEYMANDAR, De-Niang Maria, 41199 Mönchengladbach (DE); ECKERT, Peter, 91058 Erlangen (DE); RUCKES, Jonas, 91058 Erlangen (DE)
(74) Vertreter: Siemens Patent Attorneys
(86) Internationale Anmeldenummer: PCT/EP2019/069069
(87) Internationale Veröffentlichungsnummer: WO 2020/016205

(56) Entgegenhaltungen:
- EP-A1- 1 536 172
- EP-B1- 1 536 172
- JP-A- 2001 295 963
- US-A1- 2014 033 738
- US-A1- 2016 297 451

## Beschreibung

Es wird ein Fahrzeug mit Brennstoffzelle angegeben. Darüber hinaus wird ein Betriebsverfahren für ein Fahrzeug angegeben. Die Druckschrift EP 2 924 793 A1 betrifft eine Brennstoffzelle.

In den Druckschriften US 2014 033738 A1 und EP 1 238 881 A1 sind Schienenfahrzeuge angegeben.

Eine zu lösende Aufgabe liegt darin, einen Transportschlauch anzugeben, mit dem Wasserstoffgas sicher und zuverlässig über einen Wagenübergang eines Fahrzeugs transportiert werden kann.

Diese Aufgabe wird unter anderem durch ein Fahrzeug und durch ein Betriebsverfahren mit den Merkmalen der unabhängigen Patentansprüche gelöst. Bevorzugte Weiterbildungen sind Gegenstand der übrigen Ansprüche.

Gemäß der Erfindung umfasst das Fahrzeug mehrere Fahrzeugteile, die längs einer Fahrtrichtung miteinander verbunden sind. Mindestens eine Brennstoffzelle ist zur Umsetzung von Wasserstoff und Sauerstoff zu Wasser eingerichtet. Ein Transportschlauch zwischen den Fahrzeugteilen dient zum Transport eines Trägergases für den Wasserstoff zur Brennstoffzelle. Der Transportschlauch ist mechanisch flexibel und um mindestens 10° reversibel biegbar. Der Transportschlauch umfasst ein Wellrohr oder eine Rohrwendel, durch das bzw. durch die das Trägergas für den Wasserstoff geleitet wird.

Bei dem erfindungsgemäßen Fahrzeug wird insbesondere ein Transportschlauch verwendet, der ein Wellrohr wie beispielsweise ein Edelstahlwellrohr umfasst. Alternativ umfasst der Transportschlauch eine Rohrwendel, welche ebenfalls aus Edelstahl hergestellt sein kann. Das Wellrohr bzw. die Rohrwendel ist für Wasserstoffgas undurchlässig, gleichzeitig jedoch mechanisch ausreichend flexibel, um einen Übergang zwischen zwei Fahrzeugteilen zu überbrücken. Dabei kann mittels eines solchen Wellrohrs bzw. einer solchen Rohrwendel vorteilhaft eine hohe mechanische Dauerfestigkeit und damit eine hohe Sicherheit vergleichbar mit der von starren Rohren erzielt werden. Durch die spezielle Ausformung eines Wellrohrs bzw. einer Rohrwendel weisen diese im Unterschied zu starren Rohren vorteilhaft eine begrenzte, jedoch ausreichende Flexibilität sowohl bezüglich Winkeländerungen, welche insbesondere bei Kurvenfahrten des Fahrzeugs auftreten, als auch Längenänderung zwischen den Fahrzeugteilen, welche insbesondere bei einer Fahrt über Kuppen oder Senken auftreten.

Gemäß zumindest einer Ausführungsform handelt es sich bei dem Fahrzeug um ein Schienenfahrzeug wie einen Zug. Insbesondere ist das Fahrzeug ein Triebzug, welcher beispielsweise als ein Regionalzug, auch als Commuter Train bezeichnet, ausgestaltet ist.

Gemäß zumindest einer Ausführungsform umfasst das Fahrzeug mehrere Fahrzeugteile, wobei diese längs einer Fahrtrichtung des Fahrzeugs miteinander verbunden sind. Beispielsweise sind die Fahrzeugteile beweglich miteinander verbunden, sodass insbesondere Kurvenfahrten auf Schienen möglich sind. Eine Verbindung zwischen den Fahrzeugteilen kann bestimmungsgemäß lösbar sein, insbesondere über Kupplungen. Alternativ ist es möglich, dass die Fahrzeugteile quasi permanent über so genannte Kurzkupplungen miteinander verbunden sind und die einzelnen Fahrzeugteile nicht zum eigenständigen Betrieb eingerichtet sind. Die Fahrzeugteile können insbesondere Lokomotiven mit daran angekuppelten Waggons oder End- und Mittelwagen eines Triebzugs sein.

Gemäß der Erfindung umfasst das Fahrzeug eine oder mehrere Brennstoffzellen. Die mindestens eine Brennstoffzelle ist zur Erzeugung von elektrischem Strom durch die Umsetzung von Wasserstoff und Sauerstoff zu Wasser eingerichtet. Der Wasserstoff wird aus einem Trägergas heraus umgesetzt. Das Trägergas umfasst bevorzugt den benötigten Wasserstoff. Bei dem Trägergas für Wasserstoff handelt es sich beispielsweise um Wasserstoffgas, kurz H₂. Ebenso ist es möglich, dass als Trägergas für den Wasserstoff Erdgas und/oder Reformatgas dient. Der Sauerstoff für die Brennstoffzelle entstammt bevorzugt der Umgebungsluft, kann aber auch als reiner Sauerstoff zugeführt werden. Insbesondere ist es möglich, dass der Sauerstoff zum Betreiben der Brennstoffzelle aus einer Luftleitung wie einer Hauptdruckluftleitung zum Betrieb von Bremsen des Fahrzeugs stammt.

Gemäß der Erfindung umfasst das Fahrzeug einen oder mehrere Transportschläuche. Der mindestens eine Transportschlauch ist zwischen den Fahrzeugteilen, insbesondere jeweils zwischen benachbarten Fahrzeugteilen, angeordnet und zum Transport eines Trägergases für den Wasserstoff zur Brennstoffzelle eingerichtet. Der Transportschlauch ist mechanisch flexibel und um mindestens 10°, insbesondere um mindestens 20°, reversibel biegbar, bezogen auf eine Längsachse des Transportschlauchs in ungebogenem, geradem Zustand. Der Transportschlauch kann Verzweigungen, Kupplungen und/oder Anschlüsse aufweisen.

Gemäß einer ersten Ausführungsform der Erfindung umfasst der Transportschlauch ein Wellrohr oder ist ein Wellrohr. Durch das Wellrohr wird das Transportgas für den Wasserstoff geleitet. Gemäß einer Weiterbildung besteht das Wellrohr aus einem Edelstahlmaterial. Gemäß einer alternativen Weiterbildung kann das Wellrohr jedoch ebenso aus einem anderen wasserstoffdichten Material sein, zum Beispiel aus einem Kunststoffmaterial, insbesondere aus einem fluorierten Kunststoff wie ein Perfluoralkoxy-Polymer. Insbesondere wird mit dem Wellrohr der Bereich zwischen den Fahrzeugteilen überbrückt.

Gemäß einer alternativen zweiten Ausführungsform der Erfindung umfasst der Transportschlauch eine Rohrwendel. Auch die Rohrwendel kann gemäß einer Weiterbildung aus einem Edelstahlmaterial oder gemäß einer alternativen Weiterbildung aus einem geeigneten Kunststoffmaterial bestehen. Insbesondere kann das Rohr eine glatte Innenwand aufweisen, wodurch gegenüber einem Wellrohr ein geringerer Druckverlust entsteht.

Durch die Verwendung eines begrenzt flexiblen Wellrohrs oder einer Rohrwendel für den Wagenübergang zwischen zwei Wagenteilen eines Zugs kann ein Trägergas für Wasserstoff zwischen den Wagenteilen transportiert werden. Dadurch kann beispielsweise der Ausfall einzelner Brennstoffzellen an bestimmten Fahrzeugteilen kompensiert werden. Des Weiteren können asymmetrische Bauweisen eines Zugs erfolgen, da durch einen sicheren Transport von Wasserstoff über den Wagenübergang hinweg Wasserstofftanks beispielsweise nur auf einem Wagen oder Fahrzeugteil angeordnet werden müssen, welche Brennstoffzellen sowohl auf dem eigenen Wagen bzw. Fahrzeugteil als auch auf anderen Wagen bzw. Fahrzeugteilen versorgen können. Auf einen zweiten Wasserstofftank auf einem weiteren Wagen, wie bei einer symmetrischen Anordnung der Fall, kann somit vorteilhaft verzichtet werden. Hierdurch ist eine Kostensenkung hinsichtlich der Wasserstofftanks und deren Verrohrung erzielbar. Zusätzlich wird weiterer Bauraum auf dem Wagen bzw. Fahrzeugteil frei, welcher bzw. welches keinen Wasserstofftank aufnehmen muss.

Gemäß einer weiteren Weiterbildung der Erfindung umfasst das Fahrzeug mehrere Brennstoffzellen. Die Brennstoffzellen sind über mehrere Fahrzeugteile verteilt angeordnet. Ferner umfasst das Fahrzeug einen oder mehrere Trägergastanks für das Trägergas für den Wasserstoff. Insbesondere ist genau ein Trägergastank vorhanden, der auf einem der Fahrzeugteile angeordnet ist. Das Trägergas für den Wasserstoff wird über den Transportschlauch oder über mehrere Transportschläuche zwischen den Fahrzeugteilen transportiert.

Gemäß einer weiteren Weiterbildung der Erfindung liegt der Transportschlauch stellenweise zwischen den Fahrzeugteilen nach außen frei. Das heißt, der Transportschlauch ist zumindest zeitweise einer Umgebungsluft und/oder einer Umgebungsstrahlung ausgesetzt. Mit anderen Worten kann der Transportschlauch Witterungseinflüssen wie Regen oder Schnee und UV-Strahlung aus der Sonnenstrahlung ausgesetzt sein. Der Transportschlauch ist widerstandsfähig gegenüber solchen Umwelteinflüssen, also witterungsbeständig. Beispielsweise weist der Transportschlauch im bestimmungsgemäßen Gebrauch eine Lebensdauer von mindestens 30 Jahren auf.

Gemäß zumindest einer Ausführungsform wird das Trägergas für den Wasserstoff, insbesondere H₂-Gas, mit einem Druck von mindestens 3 bar oder mindestens 5 bar oder mindestens 7 bar und/oder von höchstens 20 bar oder höchstens 16 bar oder höchstens 10 bar durch den Transportschlauch geleitet. Insbesondere liegt dieser Druck bei ungefähr 8 bar.

Gemäß einer weiteren Weiterbildung ist der Transportschlauch für einen Betriebstemperaturbereich von -40 °C bis 80 °C oder mehr vorgesehen. Insbesondere ist es möglich, dass der Betriebstemperaturbereich eine Temperaturspanne von -50 °C bis 120 °C abdeckt.

Gemäß zumindest einer Ausführungsform umfasst der Transportschlauch mindestens eine Außenbeschichtung. Die Außenbeschichtung ist außen auf dem Wellrohr bzw. auf der Rohrwendel angebracht. Bei der Außenbeschichtung handelt es gemäß der Weiterbildung um einen Kunststoff. Die Außenbeschichtung befindet sich bevorzugt unmittelbar an dem Wellrohr bzw. der Rohrwendel, insbesondere unmittelbar an dem Edelstahl.

Gemäß einer weiteren Weiterbildung weist das Wellrohr eine Länge von mindestens 0,2 m oder mindestens 0,4 m auf. Alternativ oder zusätzlich liegt diese Länge bei höchstens 50 m oder höchstens 30 m oder höchstens 5 m oder höchstens 1,5 m oder höchstens 0,7 m. Insbesondere liegt die Länge des Wellrohrs um 0,5 m.

Gemäß zumindest einer Ausführungsform weist das Wellrohr oder die Rohrwendel einen Innendurchmesser von mindestens 5 mm oder mindestens 8 mm oder mindestens 10 mm auf. Alternativ oder zusätzlich liegt der Innendurchmesser des Wellrohrs bzw. der Rohrwendel bei höchstens 15 cm oder höchstens 6 cm oder höchstens 2 cm. Alternativ oder zusätzlich übersteigt ein Außendurchmesser des Wellrohrs bzw. der Rohrwendel den Innendurchmesser um mindestens 5 % oder mindestens 10 % oder mindestens 15 % und/oder um höchstens 50 % oder höchstens 30 % oder höchstens 25 %. Beispielsweise liegt der Innendurchmesser um 12 mm und der Außendurchmesser um 16 mm.

Gemäß zumindest einer Ausführungsform weist das Wellrohr bzw. die Rohrwendel eine Wandstärke von mindestens 0,15 mm oder mindestens 0,18 mm oder mindestens 0,25 mm auf. Alternativ oder zusätzlich liegt die Wandstärke bei höchstens 0,7 mm oder höchstens 0,5 mm oder höchstens 0,3 mm. Durch ein solches Wellrohr bzw. eine solche Rohrwendel ist einerseits eine hinreichende mechanische Flexibilität und andererseits eine robuste Bauweise, Langlebigkeit und Widerstandsfähigkeit gegenüber unter Druck transportiertem Wasserstoffgas gewährleistet.

Da eine Rohrwendel bei einer freien Aufhängung zwischen den Fahrzeugteilen in Schwingung geraten und dadurch übermäßig belastet werden kann, ist gemäß einer weiteren Weiterbildung ein Körper aus einem elastischen Material vorgesehen, welchen die Rohrwendel umschließt. Dieser Körper kann insbesondere als ein Wicklungskörper, auf den die Rohrwendel aufgewickelt ist, oder als ein Füllkörper, welcher nach Fertigstellung der Rohrwendel in den Innenraum eingeführt wird, ausgestaltet sein. Der Körper besteht dabei beispielsweise aus einem Kunststoffmaterial, welches eine gegenüber Schwingungen der Rohrwendel dämpfende Wirkung aufweist. Weiterhin muss das gewählte Material beständig gegenüber Wasserstoff sein, um eine Verunreinigung der Brennstoffzelle aufgrund von ausgelöstem Material zu verhindern.

Ergänzend zu dem von der Rohrwendel umschlossenen Körper kann ein außerhalb der Rohrwendel liegender Körper oder eine Ummantelung der Rohrwendel mit einer bestimmten Materialdicke vorgesehen sein, welcher aufgrund des gewählten elastischen Materials ebenfalls dämpfende Eigenschaften gegenüber Schwingungen aufweist.

Gemäß einer Weiterbildung des elastischen Körpers ist dieser ergänzend mit Befestigungsvorrichtungen versehen, die eine mechanische Befestigung bzw. Aufhängung der Rohrwendel an den Fahrzeugteilen oder einer Kupplungsvorrichtung zwischen den Fahrzeugteilen dienen. Der Körper ragt dabei beispielsweise beidseitig über die Länge der Wendel hinaus. Insbesondere können diese Befestigungsvorrichtungen aus einem metallischen Material bestehen, welches mit dem elastischen Körper dauerhaft verbunden sind. Vorteilhaft wird durch die Aufhängung bzw. Befestigung der Rohrwendel mittels des elastischen Körpers sowohl eine Biegebelastung als auch eine Druck- bzw. Zugbelastung der Rohrwendel verringert.

Darüber hinaus wird ein Betriebsverfahren für ein solches Fahrzeug angegeben. Merkmale des Fahrzeugs sind auch für das Betriebsverfahren offenbart und umgekehrt.

In mindestens einer Ausführungsform des Verfahrens wird die mindestens eine Brennstoffzelle betrieben, um das Fahrzeug zu bewegen. Mit anderen Worten verfügt das Fahrzeug über einen Brennstoffzellenantrieb. Der Brennstoffzellenantrieb kann der einzige Antrieb des Fahrzeugs sein oder es liegt noch ein weiterer Antrieb vor.

Gemäß zumindest einer Ausführungsform wird zum Betrieb der Brennstoffzelle das Trägergas für den Wasserstoff, insbesondere H₂-Gas, zwischen den Fahrzeugteilen durch den Transportschlauch hindurch transportiert.

Nachfolgend werden ein hier beschriebenes Fahrzeug und ein hier beschriebenes Verfahren unter Bezugnahme auf die Zeichnung anhand von Ausführungsbeispielen näher erläutert. Gleiche Bezugszeichen geben dabei gleiche Elemente in den einzelnen Figuren an. Es sind dabei jedoch keine maßstäblichen Bezüge dargestellt, vielmehr können einzelne Elemente zum besseren Verständnis übertrieben groß dargestellt sein.

Es zeigen:
- Figuren 1, 5, 6 und 7: schematische Schnittdarstellungen von Ausführungsbeispielen von hier beschriebenen Fahrzeugen, und
- Figuren 2, 3 und 4: schematische Schnittdarstellungen von Ausführungsbeispielen von Transportschläuchen für hier beschriebene Fahrzeuge.

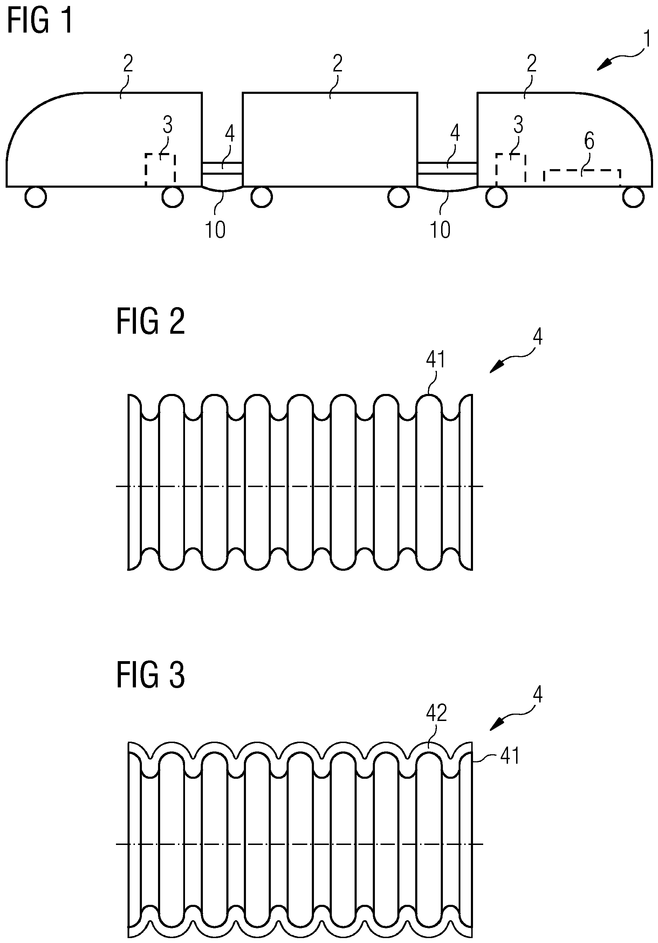

In Figur 1 ist ein Ausführungsbeispiel eines Fahrzeugs 1 gezeigt. Das Fahrzeug 1 ist ein Zug mit mehreren Fahrzeugteilen 2. Die Fahrzeugteile 2 sind durch aneinander kuppelbare Waggons gebildet. Eine mechanische Verbindung zwischen den Fahrzeugteilen 2 ist über Kopplungen 10 erzielt.

Zumindest einige der Fahrzeugteile 2 umfassen jeweils eine Brennstoffzelle 3 zum Antrieb des Fahrzeugs 1. In zumindest einem der Fahrzeugteile 2 ist ein Trägergastank 6 für Wasserstoffgas vorhanden. Zum Transport des Wasserstoffgases über die Fahrzeugteile 2 hinweg zu den jeweiligen Brennstoffzellen 3 sind zumindest zwischen den Fahrzeugteilen 2 jeweils Transportschläuche 4 vorhanden.

Die Transportschläuche 4 sind hinreichend mechanisch flexibel, um Bewegungen der Fahrzeugteile 2 relativ zueinander während der Fahrt und während eines Koppelvorgangs ausgleichen zu können. Ferner sind die Transportschläuche 4 witterungsbeständig und erfüllen die für den Betrieb des Fahrzeugs 1 notwendigen Voraussetzungen.

In Figur 2 ist ein Ausführungsbeispiel des Transportschlauches 4 illustriert. Der Transportschlauch 4 ist durch ein Wellrohr 41 mit einer beispielhaften parallelen ringförmigen Ausformung gebildet. Das Wellrohr 41 ist aus Edelstahl. Ein Innendurchmesser des Wellrohrs liegt bei ungefähr 12 mm, ein Außendurchmesser bei ungefähr 16 mm. Eine Wandstärke des Wellrohrs liegt um 0,18 mm. Eine Periodizität der Wellenstruktur in Längsrichtung liegt beispielsweise bei mindestens 25 % und/oder bei höchstens 90 % des Innendurchmessers. Mit anderen Worten sind benachbarte Fahrzeugteile bevorzugt je durch ein Wellrohr für den Transport des Trägergases von Wasserstoff miteinander verbunden.

In Figur 3 ist ein weiteres Beispiel des Transportschlauches 4 gezeigt. Zusätzlich zu dem Wellrohr 41, insbesondere aus Edelstahl, umfasst der Transportschlauch 4 eine Beschichtung 42. Die Beschichtung 42 ist direkt und ganzflächig außen auf das Wellrohr 41 aufgebracht. Die Beschichtung 42 ist bevorzugt aus einem Kunststoff.

Es ist möglich, dass die Beschichtung 42 vergleichsweise dünn ist. Das heißt, durch die Beschichtung 42 kann eine äußere Kontur des Wellrohres 41 formtreu nachgeahmt werden.

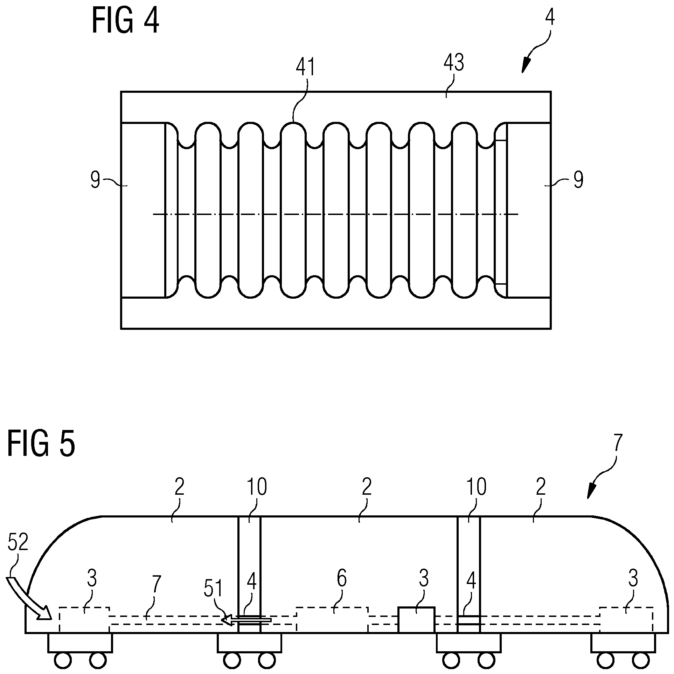

Im Ausführungsbeispiel des Transportschlauches 4, wie in Figur 4 gezeigt, ist eine Umhüllung 43 um das Wellrohr 41 herum angebracht. Die Umhüllung 43 kann wiederum aus einem Kunststoff sein. Die Umhüllung 43 ist vergleichsweise dick, sodass die gewellte Form des Wellrohres 41 außen an der Umhüllung 43 nicht mehr erkennbar ist.

Eine solche Umhüllung 43 kann auch mit einer Beschichtung 42, wie in Figur 3 gezeigt, kombiniert werden. Ferner können mehrere Umhüllungen 43 vorhanden sein, die übereinander angeordnet sind.

Außerdem ist es möglich, dass der Transportschlauch 4 eines oder mehrere Endstücke 9 umfasst. Die Endstücke 9 können als Ventil gestaltet sein und/oder sind Verbindungsstücke, mit denen der Transportschlauch gasdicht angeschlossen werden kann. Solche Endstücke 9 können auch in allen anderen Ausführungsbeispielen vorhanden sein.

Beim Ausführungsbeispiel der Figur 5 sind die Fahrzeugteile 2 des Fahrzeugs 1 über Kupplungen aneinandergekoppelt. Die Fahrzeugteile 2 sind dabei beispielsweise bestimmungsgemäß nicht dazu eingerichtet, regelmäßig voneinander separiert zu werden, sodass vorzugsweise so genannten Kurzkupplungen eingesetzt werden. Wiederum ist ein Trägergastank 6 vorhanden, von dem ausgehend die Brennstoffzellen 3 über Wasserstoffleitungen 7 mit einem Trägergas 51 für Wasserstoff, insbesondere H₂-Gas, versorgt werden. Ein Trägergas 52 für Sauerstoff wird zum Beispiel der Umgebungsluft entnommen oder, bevorzugt, einer Hauptdruckluftleitung des Fahrzeugs 1. Das Fahrzeug 1 ist insbesondere als ein Triebzug für den Regionalverkehr ausgebildet.

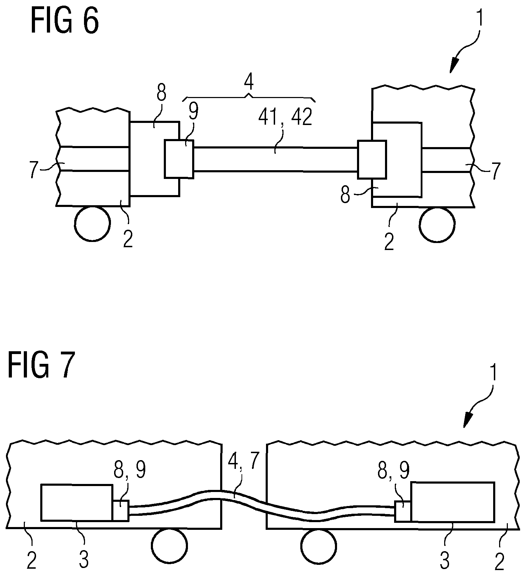

In Figur 6 ist illustriert, dass die Wasserstoffleitungen 7 jeweils durch ein Ventil 8 abgeschlossen sind. Das Ventil 8 kann innerhalb der Fahrzeugteile 2 angebracht sein oder sich außen an einem Fahrzeugteil 2 befinden. Entlang der Fahrzeugteile 2 aufeinanderfolgende Ventile 8 sind über den Transportschlauch 4 miteinander verbunden. Dazu verfügt der Transportschlauch 4 bevorzugt über die Endstücke 9, die auf die Ventile 8 abgestimmt sind. Das heißt, der Transportschlauch 4 ist lediglich zur Überbrückung eines Zwischenraums zwischen den Fahrzeugteilen 2 eingerichtet.

Eine mechanische Verbindung und Kopplung zwischen den Fahrzeugteilen 2 ist zur Vereinfachung der Darstellung in Figur 6 nicht dargestellt, ebenso wenig wie in Figur 7.

Demgegenüber erstreckt sich der Transportschlauch 4 gemäß Figur 7 durchgehend oder im Wesentlichen durchgehend zwischen den Brennstoffzellen 3 und/oder dem nicht gezeichneten Trägergastank. Das heißt, der Transportschlauch 4 zwischen den Fahrzeugteilen 2 kann einstückig mit der Wasserstoffleitung 7 innerhalb der Fahrzeugteile 2 gestaltet sein. Damit können Ventile an einem Zwischenbereich zwischen den Fahrzeugteilen 2 entfallen. Im Bereich des Übergangs zwischen den Fahrzeugteilen 2 ist der Transportschlauch 4 dabei zumindest abschnittsweise als ein Wellrohr bzw. eine Rohrwendel ausgestaltet, um relative Bewegungen der Fahrzeugteile zueinander ausgleichen zu können.

### Bezugszeichenliste

- 1: Fahrzeug
- 2: Fahrzeugteil
- 3: Brennstoffzelle
- 4: Transportschlauch
- 41: Wellrohr
- 42: Beschichtung
- 43: Umhüllung
- 51: Trägergas für Wasserstoff
- 52: Trägergas für Sauerstoff
- 6: Trägergastank
- 7: Wasserstoffleitung
- 8: Ventil
- 9: Endstück
- 10: Kopplung

## Patentansprüche

1. Fahrzeug (1) mit
- mehreren Fahrzeugteilen (2), die längs einer Fahrtrichtung des Fahrzeugs (1) miteinander verbunden sind,
- mindestens einer Brennstoffzelle (3) zur Erzeugung von elektrischem Strom mittels Umsetzung von Wasserstoff und Sauerstoff zu Wasser, und
- mindestens einem Transportschlauch (4) zwischen den Fahrzeugteilen (2) zum Transport eines Trägergases (51) für den Wasserstoff zur Brennstoffzelle (3),
wobei
- der Transportschlauch (4) mechanisch flexibel und damit um mindestens 10° reversible biegbar ist, und
- der Transportschlauch (4) ein Wellrohr (41) oder eine Rohrwendel umfasst, das bzw. die zur Leitung des Trägergases (51) für den Wasserstoff eingerichtet ist.

2. Fahrzeug (1) nach dem vorhergehenden Anspruch,
bei dem das Wellrohr (41) oder die Rohrwendel aus Edelstahl ist.

3. Fahrzeug (1) nach Anspruch 1,
bei dem das Wellrohr (4) oder die Rohrwendel aus zumindest einem Kunststoff ist.

4. Fahrzeug (1) nach einem der vorhergehenden Ansprüche, mit mehrere Brennstoffzellen (3) und zumindest einem Trägergastank (6),
wobei die Brennstoffzellen (3) über mehrere der Fahrzeugteile (2) verteilt angeordnet sind, und
wobei der Trägergastank (6) in nur einem der Fahrzeugteile (2) untergebracht ist, sodass der mindestens eine Transportschlauch (4) dazu eingerichtet ist, das Trägergas (51) für den Wasserstoff von dem Fahrzeugteil (2) mit dem Trägergastank (6) aus auf die anderen Fahrzeugteile (2) zu verteilen.

5. Fahrzeug (1) nach einem der vorhergehenden Ansprüche, bei dem das Wellrohr (41) oder die Rohrwendel nach außen freiliegt, sodass das Wellrohr (41) bzw. die Rohrwendel zumindest zeitweise einer Umgebungsluft und einer Umgebungsstrahlung ausgesetzt ist.

6. Fahrzeug (1) nach einem der vorhergehenden Ansprüche, bei dem das Trägergas (51) für den Wasserstoff H₂-Gas ist, wobei der Transportschlauch (4) mindestens für einen Betriebstemperaturbereich von -40 °C bis 80 °C vorgesehen ist.

7. Fahrzeug (1) nach einem der vorhergehenden Ansprüche,
bei dem der Transportschlauch (4) mindestens eine Außenbeschichtung (42) umfasst, die außen auf dem Wellrohr (41) oder der Rohrwendel angebracht ist,
wobei die Außenbeschichtung (42) mindestens einen Kunststoff umfasst.

8. Fahrzeug (1) nach einem der vorhergehenden Ansprüche, bei dem das Wellrohr (41) eine Länge zwischen einschließlich 0,2 m und einschließlich 1,5 m aufweist.

9. Fahrzeug (1) nach einem der vorhergehenden Ansprüche,
bei dem das Wellrohr (41) oder die Rohrwendel einen Innendurchmesser zwischen einschließlich 8 mm und einschließlich 6 cm aufweist und ein Außendurchmesser des Wellrohrs (41) den Innendurchmesser um mindestens 10 % und um höchstens 30 % übersteigt,
wobei eine Wandstärke des Wellrohrs (41) oder der Rohrwendel zwischen einschließlich 0,15 mm und einschließlich 0,5 mm liegt.

10. Fahrzeug (1) nach einem der vorhergehenden Ansprüche, bei dem in zumindest dem von der Rohrwendel umschlossenen Raum ein Körper, insbesondere ein Wicklungskörper oder Füllkörper, aus einem elastischen Material angeordnet ist.

11. Fahrzeug (1) nach Anspruch 10, bei dem der Körper Befestigungsvorrichtungen aufweist, welche einer mechanischen Aufhängung der Rohrwendel an den Fahrzeugteilen (2) und/oder an einer die Fahrzeugteile (2) verbindenden Kupplung dienen.

12. Betriebsverfahren für ein Fahrzeug (1) nach einem der vorherigen Ansprüche,
wobei die zumindest eine Brennstoffzelle (3) betrieben wird, um das Fahrzeug (1) zu bewegen, und
wobei zum Betrieb der Brennstoffzelle (3) das Trägergas (51) für den Wasserstoff zwischen den Fahrzeugteilen (2) durch den Transportschlauch (4) hindurch transportiert wird,
wobei das Wellrohr (41) oder die Rohrwendel dazu eingerichtet ist, dass das Trägergas (51) für den Wasserstoff mit einem Druck von mindestens 3 bar und höchstens 16 bar durch den Transportschlauch (4) geleitet wird.

## Claims

1. Vehicle (1) with
- a plurality of vehicle parts (2), which are interconnected along a direction of travel of the vehicle (1),
- at least one fuel cell (3) for generating electrical current by converting hydrogen and oxygen into water, and
- at least one transport hose (4) between the vehicle parts (2) for transporting a carrier gas (51) for the hydrogen to the fuel cell (3),
wherein
- the transport hose (4) is mechanically flexible and thus reversibly bendable by at least 10°, and
- the transport hose (4) comprises a corrugated tube (41) or a coiled tube, which is configured to conduct the carrier gas (51) for the hydrogen.

2. Vehicle (1) according to the preceding claim,
in which the corrugated tube (41) or the coiled tube is made of stainless steel.

3. Vehicle (1) according to claim 1,
in which the corrugated tube (4) or the coiled tube is made of at least one plastic.

4. Vehicle (1) according to one of the preceding claims, with a plurality of fuel cells (3) and at least one carrier gas tank (6),
wherein the fuel cells (3) are arranged distributed over a plurality of the vehicle parts (2), and
wherein the carrier gas tank (6) is accommodated in only one of the vehicle parts (2), meaning that the at least one transport hose (4) is configured to distribute the carrier gas (51) for the hydrogen from the vehicle part (2) with the carrier gas tank (6) to the other vehicle parts (2).

5. Vehicle (1) according to one of the preceding claims,
in which the corrugated tube (41) or the coiled tube is exposed to the outside, meaning that the corrugated tube (41) or the coiled tube is at least temporarily exposed to ambient air and ambient radiation.

6. Vehicle (1) according to one of the preceding claims,
in which the carrier gas (51) for the hydrogen is H₂ gas, wherein the transport hose (4) is intended at least for an operating temperature range from -40 °C to 80 °C.

7. Vehicle (1) according to one of the preceding claims,
in which the transport hose (4) comprises at least one outer coating (42), which is applied to the outside of the corrugated tube (41) or the coiled tube,
wherein the outer coating (42) comprises at least one plastic.

8. Vehicle (1) according to one of the preceding claims,
in which the corrugated tube (41) has a length between 0.2 m and 1.5 m, inclusive.

9. Vehicle (1) according to one of the preceding claims,
in which the corrugated tube (41) or the coiled tube has an internal diameter between 8 mm and 6 cm, inclusive, and an external diameter of the corrugated tube (41) exceeds the internal diameter by at least 10 % and by at most 30 %, wherein a wall thickness of the corrugated tube (41) or the coiled tube lies between 0.15 mm and 0.5 mm, inclusive.

10. Vehicle (1) according to one of the preceding claims,
in which a body, in particular a winding body or filling body, made of an elastic material is arranged in at least the space enclosed by the coiled tube.

11. Vehicle (1) according to claim 10, in which the body has fastening apparatuses, which are used for mechanical suspension of the coiled tube on the vehicle parts (2) and/or on a coupling that connects the vehicle parts (2).

12. Operating method for a vehicle (1) according to one of the preceding claims,
wherein the at least one fuel cell (3) is operated in order to move the vehicle (1), and
wherein, to operate the fuel cells (3), the carrier gas (51) for the hydrogen is transported between the vehicle parts (2) and through the transport hose (4),
wherein the corrugated tube (41) or the coiled tube is configured such that the carrier gas (51) for the hydrogen is configured through the transport hose (4) with a pressure of at least 3 bar and at most 16 bar.

## Revendications

1. Véhicule (1) comprenant
- plusieurs parties (2) de véhicule, qui sont reliées les unes aux autres suivant une direction de circulation du véhicule (1),
- au moins une pile (3) à combustible de production de courant électrique, au moyen de la transformation de l'hydrogène et de l'oxygène en eau, et
- au moins un tuyau (4) souple de transport entre les parties (2) du véhicule pour le transport à la pile (3) à combustible d'un gaz (51) porteur pour l'hydrogène,
dans lequel
- le tuyau (4) souple est souple mécaniquement et peut ainsi être courbé de manière réversible d'au moins 10°, et
- le tuyau (4) souple de transport comprend un tuyau (41) ondulé ou à boudin, qui est agencé pour conduire le gaz (51) support pour l'hydrogène.

2. Véhicule (1) suivant la revendication précédente,
dans lequel le tuyau (41) ondulé ou le boudin est en acier fin.

3. Véhicule (1) suivant la revendication 1,
dans lequel le tuyau (4) ondulé ou le boudin est en au moins une matière plastique.

4. Véhicule (1) suivant l'une des revendications précédentes, comprenant plusieurs piles (3) à combustible et au moins une cuve (6) de gaz support,
dans lequel les piles (3) à combustible sont réparties sur plusieurs des parties (2) du véhicule et
dans lequel la cuve (6) de gaz support est logée dans seulement l'une des parties (2) du véhicule, de sorte que le au moins un tuyau (4) souple de transport est agencé pour répartir le gaz (51) support pour l'hydrogène de la partie (2) du véhicule ayant la cuve (6) de gaz support aux autres parties (2) du véhicule.

5. Véhicule (1) suivant l'une des revendications précédentes, dans lequel le tube (41) ondulé ou le boudin est non protégé de l'extérieur, de sorte que le tube (41) ondulé ou le boudin est soumis, au moins de temps à autre, à de l'air ambiant et à un rayonnement ambiant.

6. Véhicule (1) suivant l'une des revendications précédentes,
dans lequel le gaz (51) support pour l'hydrogène est du H₂ gazeux,
dans lequel le tuyau (4) souple de transport est prévu au moins pour une plage de température de fonctionnement de -40°C à 80°C.

7. Véhicule (1) suivant l'une des revendications précédentes
dans lequel le tuyau (4) souple de transport comprend au moins un revêtement (42) extérieur, qui est mis à l'extérieur sur le tube (41) ondulé, ou le boudin,
dans lequel le revêtement (42) extérieur comprend au moins une matière plastique.

8. Véhicule (1) suivant l'une des revendications précédentes, dans lequel le tube (41) ondulé a une longueur entre y compris 0,2 m et y compris 1,5 m.

9. Véhicule (1) suivant l'une des revendications précédentes,
dans lequel le tube (41) ondulé ou le boudin a un diamètre intérieur entre y compris 8 mm et y compris 6 cm et un diamètre extérieur du tube (41) ondulé, qui dépasse le diamètre intérieur d'au moins 10% et d'au plus 30 %,
dans lequel une épaisseur de paroi du tube (41) ondulé ou du boudin est comprise entre y compris 0,15 mm et y compris 0,5 mm.

10. Véhicule (1) suivant l'une des revendications précédentes, dans lequel dans au moins un espace enfermé par le boudin, est disposé un corps, en particulier un corps enroulé ou un corps plein en un matériau élastique.

11. Véhicule (1) suivant la revendication 10, dans lequel le corps a des dispositifs de fixation, qui servent à une suspension mécanique du boudin aux parties (2) du véhicule et/ou à un accouplement reliant les parties (2) du véhicule.

12. Procédé pour faire fonctionner un véhicule (1) suivant l'une des revendications précédentes,
dans lequel on fait fonctionner la au moins une pile (3) à combustible pour mettre en mouvement le véhicule (1), et
dans lequel, pour faire fonctionner la pile (3) à combustible, on transporte le gaz (51) porteur pour l'hydrogène entre les parties (2) du véhicule, en passant par le tuyau (4) souple de transport,
dans lequel le tube (41) ondulé ou le boudin est agencé pour conduire le gaz (51) support pour l'hydrogène, avec une pression d'au moins 3 bar et d'au plus 16 bar, dans le tuyau (4) souple de transport.
